# EUROPEAN PATENT APPLICATION

(11) **EP 1 079 536 A2**
(43) Date of publication of application: **28.02.2001**
(21) Application number: 00107077.0
(22) Date of filing: 05.04.2000
(51) Int. Cl.: H04B 1/707, H04B 3/54

(54) **Wired spread spectrum communication apparatus and communication method**

(30) Priority: 27.08.1999 JP 24091899; 08.02.2000 JP 2000030116
(71) Applicant: Ibiden Industries Co., Ltd., Ogaki-shi, Gifu-ken 503-0936 (JP)
(72) Inventor: Suetsugu, Tadashi, Fukuoka-shi, Fukuoka-ken, 814-0002 (JP); Kawashima, Mitsusato, Ogaki-shi, Gifu-ken, 503-0936 (JP)
(74) Representative: VOSSIUS & PARTNER

(57) **Abstract**

A transmission unit incorporates spreading-code generators, multipliers and an adder. Thus, each of information signals D1 to Dn of a plurality of channels is multiplied with each of predetermined spreading codes SC1 to SCn so as to be converted into spread signals SS1 to SSn and added to one another so as to be synthesized as a transmission signal. Therefore, the information signals D1 to Dn of the plural channels can directly be spread so that the transmission signal is obtained. Hence it follows that the transmission signal, which is a digital signal, can directly be transmitted to an electric line which is a transmission line. The method of multivalue-modulating information signals of plural channels and spreading the information signals is not employed as distinct from CDMA for wireless communication. Therefore, a modulation circuit for performing multi-value modulation is not required. As a result, a wired spread spectrum communication can be realized with a relatively simple structure.

## Description

The present invention relates to a wired spread spectrum communication apparatus for transmitting an information signal by using a transmission line and a communication method.

The advances of the multiple access technology developed in recent years result in a variety of multiplexing methods being studied. Under the foregoing circumstance, great attention is being given to a code-division multiple access (hereinafter called "CDMA") which is capable of enlarging a multiple capacity as compared with the frequency division multiplexing method and the time division multiplexing method.

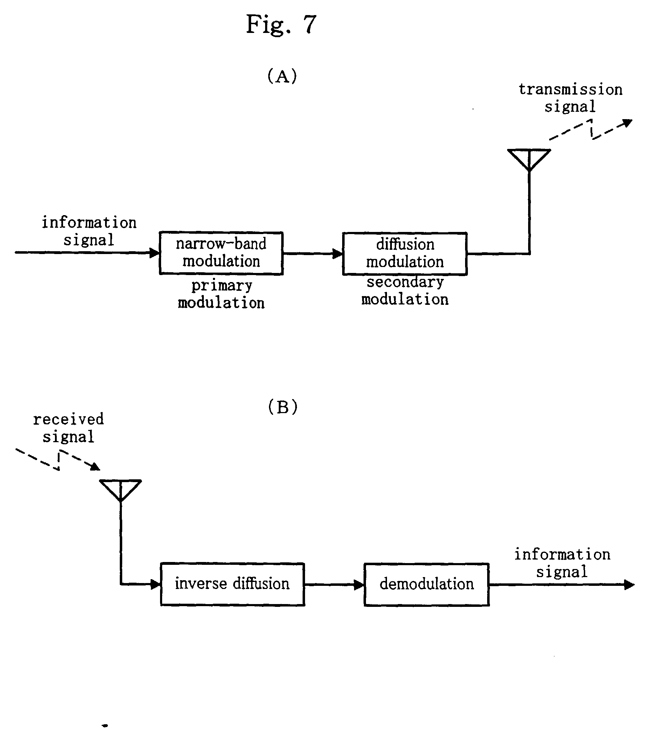

As shown in Fig. 7 (A), for example, the spread spectrum method employed in radio communication is, in general, structured as follows: an information signal is converted into a transmission signal having a radio frequency (for example, a 2.4 GHz band) by, as a first step, converting the information signal to have a narrow-band waveform by performing modulation (primary modulation ) using PSK or the like or multi-valued modulation using CDMA or QPSK. Then, diffusion modulation (secondary modulation) is performed to spread the spectrum. The receiver portion (see Fig. 7 (B) has a structure to inversely spread the supplied signal having the spread spectrum to restore the signal to an inversely-spread signal (a primarily modulated signal). Then, the receiver portion demodulates the information signal by a heterodyne wave-detector or the like thereof.

A fact is known that synchronization of signals required as a precondition for performing the communication is established by a synchronization capturing method arranged to detect a correlation value. That is, a correlation value between a spreading code sequence of the transmission side and the inverted code sequence of the receiving side is detected to capture the synchronization so as to establish the synchronization.

The spread spectrum communication method adapted to the wired communication, a necessity arises, however, for the transmission side to have a primary modulation circuit for modulating the information signal. Also the receiving side must have a demodulating circuit for demodulating the signal, which has been inversely spread, into the information signal. Therefore, there arises a problem in that the structures of circuits of the communication apparatus cannot be simplified.

The synchronization capturing method arranged to detect the correlation value, however, suffers from a problem in that a relatively large-scale special circuit is required to detect the predetermined correlation value. Since the multiplexing method using the CDMA encounters formation of a plurality of peak points of the correlation between the spreading code sequences, the initial synchronization cannot easily be captured. Therefore, a long time is required to establish the synchronization. As a result, a fact has been known that the synchronization capturing method arranged to detect the correlation value cannot be employed in the packet communication system for use in a LAN or the like from a viewpoint of practical use because the communication period of time per packet is too short.

To solve the above-mentioned problem, an object of the present invention is to provide a wired spread spectrum communication apparatus which is capable of realizing a spread spectrum communication by using a relatively simple structure and a communication method.

Another object of the present invention is to provide a wired spread spectrum communication apparatus which is capable of realizing a CDMA which is able to quickly capture synchronization.

To achieve the foregoing objects, according to one aspect of the invention, there is provided a wired spread spectrum communication apparatus for transmitting information signals by using a transmission line, the wired spread spectrum communication apparatus comprising:
a spreading-code generator for generating a predetermined spreading code;
a multiplier for generating a spread signal by multiplying the spreading code and the information signal; and
transmission means for transmitting the spread signal to the transmission line.

Other objects, features and advantages of the invention will be evident from the following detailed description of the preferred embodiments described in conjunction with the attached drawings.

In order to accomplish the said objects, according to the present invention, a wired spread spectrum communication apparatus for transmitting information signals by using a transmission line, said wired spread spectrum communication apparatus comprising:
a spreading-code generator for generating a predetermined spreading code;
a multiplier for generating a spread signal by multiplying said spreading code and said information signal; and
transmission means for transmitting said spread signal to said transmission line.

In order to accomplish the said objects, according to the present invention, a wired spread spectrum communication apparatus for transmitting information signals by using a transmission line, said wired spread spectrum communication apparatus comprising:
a spreading-code generator for generating a predetermined spreading code;
a multiplier for generating an inversely-spread signal by multiplying a signal received from said transmission line and said spreading code;
an integrator for integrating said inversely-spread signal in a quantity of at least one period of a bit region constituted by one bit of said information signal; and
a comparator for decoding said information signal by making a comparison to determine whether or not an integrated value calculated by said integrator is larger than a predetermined value.

In order to accomplish the said objects, according to the present invention, a wired spread spectrum communication method of transmitting information signals by using a transmission line, said wired spread spectrum communication method comprising the steps of:
generating a spread signal by multiplying said information signal and a predetermined spreading code; and transmitting said spread signal to said transmission line.

In order to accomplish the said objects, according to the present invention, a wired spread spectrum communication method of transmitting information signals by using a transmission line, said wired spread spectrum communication method comprising the steps of:
generating an inversely-spread signal by multiplying a signal received from said transmission line with a predetermined spreading code; integrating said inversely-spread signal in a quantity of at least one period of a bit region constituted by one bit of said information signal; and determining whether or not an obtained integrated value is larger than a predetermined value to decode said information signals.

In order to accomplish the said objects, according to the present invention, a wired spread spectrum communication apparatus for transmitting information signals by using a transmission line, said wired spread spectrum communication apparatus comprising:
a synchronizing-signal generator for generating a synchronized signal synchronized with any one of said information signal, a spreading code for spreading said information signal and a spread signal; and
transmission means for transmitting said synchronized signal together with said spread signal.

In order to accomplish the said objects, according to the present invention, a wired spread spectrum communication method of transmitting information signals by using a transmission line, said wired spread spectrum communication method comprising the step of:
transmitting a synchronized signal synchronized with any one of said information signal, a spreading code for spreading said information signal and a spread signal to a transmission line together with said spread signal.

In order to accomplish the said objects, according to the present invention, a wired spread spectrum communication apparatus for transmitting information signals of a plurality of channels by code-division multiple connection through a transmission line, said wired spread spectrum communication apparatus comprising:
spreading-code generators provided to correspond to said channels;
multipliers for multiplying said spreading code supplied from said spreading-code generators and said information signals with one another so to generate spread signals; and
adders for synthesizing a transmission signal by adding said spread signals for corresponding channels to one another.

In order to accomplish the said objects, according to the present invention, a wired spread spectrum communication apparatus for transmitting information signals of a plurality of channels by code-division multiple connection through a transmission line, said wired spread spectrum communication apparatus comprising:
spreading-code generators provided to correspond to said channels;
multipliers for generating an inversely-spread signal for each channel by multiplying said spreading codes supplied from said spreading-code generator and a signal received from said transmission line;
integrators for integrating said inversely-spread signal in a quantity of at least one period of a bit region constituted by one bit of said information signal; and
comparators for decoding said information signals by making comparisons to determine whether or not integrated values calculated by said integrators are larger than a predetermined value.

In order to accomplish the said objects, according to the present invention, a wired spread spectrum communication method of transmitting information signals of a plurality of channels by code-division multiple connection through a transmission line, said wired spread spectrum communication method comprising the steps of:
generating spread signals by multiplying information signals of a plurality of channels with corresponding spreading codes; and
adding said spread signals to one another to transmit said added spread signals to said transmission line.

In order to accomplish the said objects, according to the present invention, a wired spread spectrum communication method of transmitting information signals of a plurality of channels by code-division multiple connection through a transmission line, said wired spread spectrum communication method comprising the steps of:
generating inversely-spread signals by multiplying a signal received from said transmission line with spreading codes corresponding to said channels; integrating said inversely-spread signals for said corresponding channels in a quantity of at least one period of a bit region constituted by one bit of said information signal; and decoding said information signal for said channels by determining whether or not integrated values are larger than a predetermined value.

In order to accomplish the said objects, according to the present invention, a wired spread spectrum communication apparatus for transmitting information signals of a plurality of channels by code-division multiple connection through a transmission line, said wired spread spectrum communication apparatus comprising:
synchronizing-signal generators for generating synchronized signals synchronized with any one of said information signals, spreading codes for spreading said information signals and spread signals; and
transmission means for transmitting said synchronized signals to said transmission line together with said spread signals.

In order to accomplish the said objects, according to the present invention, a wired spread spectrum communication method of transmitting information signals of a plurality of channels by code-division multiple connection through a transmission line, said wired spread spectrum communication method comprising the step of:
transmitting synchronized signals synchronized with any one of said information signals, spreading codes for spreading said information signals and spread signals to said transmission line together with said spread signals.

The aspect of the invention incorporates the spreading-code generator, the multiplier and the transmission means. Thus, the information signals are multiplied with predetermined spreading codes so as to be converted into spread signals which are transmitted to the transmission line. Thus, the information signals can directly be spread and transmitted.

The aspect of the invention incorporates the spreading-code generator, the multiplier, the integrator and the comparator. Therefore, the signals received from the transmission line are multiplied with the inversely-spreading codes so as to be formed into the inversely-spread signals. Then, at least one period of the bit region of each bit of the information signal is integrated. Then, whether or not the integrated value is larger than the predetermined value, is determined by making a comparison. Thus, decoding to the information signals is performed. At least one period of the inversely-spread signal is integrated for each bit of the information signal so as to extract the information signals from the inversely-spread signals.

The aspect of the invention has the step of multiplying the information signal and the spreading code to generate a spread signal. Then, the spread signal is transmitted to the transmission line. That is, the information signal is directly spread to transmit the spread signal to the transmission line.

The aspect of the invention has the steps of multiplying a signal received from the transmission line with a predetermined spreading code to generate an inversely-spread signal; integrating the inversely-spread signal in a quantity of at least one period of the information signal constituted by one bit of the information signal; and making a determination whether or not the integrated value is larger than a predetermined value so that the information signal for each channel is decoded. That is, the generated inversely-spread signal is integrated in a quantity of at least one period constituted by one bit of the information signal to extract the information signal from the inversely-spread signal.

The aspect of the invention incorporates the synchronizing-signal generator and the transmission means. As a result, the synchronized signal synchronized with any one of the information signal, the spreading code and the spread signal is transmitted to the transmission line together with the spread signal. Also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line.

The aspect of the invention has the step of transmitting the synchronized signal synchronized with any one of the information signal, the spreading code and the spread signal to the transmission line together with the spread signal. That is, also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line.

The aspect of the invention incorporates the spreading-code generator, the multiplier and the adder. Thus, each of the information signals of a plurality of channels is multiplied with a predetermined spreading code so as to be converted into the spread signal. Then, the spread signals are added so as to be synthesized as the transmission signals. Thus, the information signals of the plural channels can directly be spread to obtain the transmission signals.

The aspect of the invention incorporates the spreading-code generator, the multiplier, the integrator and the comparator. Thus, the signal for each channel received from the transmission line is multiplied with the inversely-spreading code so as to be formed into the inversely-spread signal. Then, the inversely-spread signal is integrated in a quantity of at least one period constituted by one bit of the information signal. Then, whether or not the integrated value is larger than a predetermined value is determined by making a comparison. The inversely-spread signal is integrated in a quantity of at least one period constituted by one bit of the information signal to extract the information signals from the inversely-spread signals.

The aspect of the invention has the step of multiplying each information signal for each of the plural channels with a corresponding spreading code to generate a spread signal. Then, the spread signals are added and transmitted to the transmission line. That is, the information signals of a plurality of the channels are directly spread and added so as to be transmitted to the transmission line.

The aspect of the invention has the step of multiplying the signal for each channel received from the transmission line with the corresponding spreading code so as to generate the inversely-spread signal. Then, the inversely-spread signal is integrated in a quantity of at least one period constituted by one bit of the information signal. Then, whether or not the integrated value is larger than a predetermined value is determined by making a comparison to decode the information signal for each channel. The inversely-spread signal is integrated in a quantity of at least one period constituted by one bit of the information signal so as to extract the information signals from the inversely-spread signals.

The aspect of the invention incorporates the synchronizing-signal generator and the transmission means. Therefore, the synchronized signal synchronized with any one of, the information signal, the spreading code and the spread signal is transmitted to the transmission line together with the spread signal. Also the synchronized signal which is effective for the receiving side to reproduce the signal is transmitted to the transmission line together with the spread signal.

The aspect of the invention has the step of transmitting the synchronized signal which is synchronized with any one of the information signal, the spreading code or the spread signal to the transmission line together with the spread signal. That is, also the synchronized signal which is effective for the receiving side to reproduce the signal is transmitted to the transmission line together with the spread signal.

### BRIEF DESCRIPTION OF THE DRAWINGS

Fig. 1 is a block diagram showing the structure of a transmission unit of a communication apparatus according to an embodiment of the present invention;
Fig. 2 is a diagram showing an example of synthesis of a transmission signal which is transmitted by the transmission unit of the communication apparatus according to the embodiment and an example of decoding of information signals which is performed by a receiving unit;
Fig. 3 is a diagram showing an image of distribution of frequencies of a spread signal, a marking signal and the like w is transmitted by the transmission unit of the communication apparatus according to the embodiment with respect to time;
Fig. 4 is a block diagram showing the structure of the transmission unit of the communication apparatus according to the embodiment of the present invention;
Fig. 5 is a block diagram showing the structure of a receiving unit of the communication apparatus according to the embodiment of the present invention;
Fig. 6 is a block diagram showing the structure of the receiving unit of the communication apparatus according to the embodiment of the present invention;
Fig. 7 is a block diagram showing a CDMA communication system for wireless communication, in which Fig. 7 (A) shows the transmission system and Fig. 7 (B) shows the receiving system;
Fig. 8 is a diagram showing an example of a system bus of a computer incorporating the communication apparatus according to the embodiment of the present invention;
Fig. 9 is a diagram showing another example of the system bus of the computer incorporating the communication apparatus according to the embodiment of the present invention;
Fig. 10 is a diagram showing an example, a parallel-serial converter incorporating the communication apparatus according to the embodiment of the present invention; and
Fig. 11 is a diagram showing an example of a control line for a large-scale unit incorporating the communication apparatus according to the embodiment of the present invention.

### Detailed Description of the Preferred Embodiment

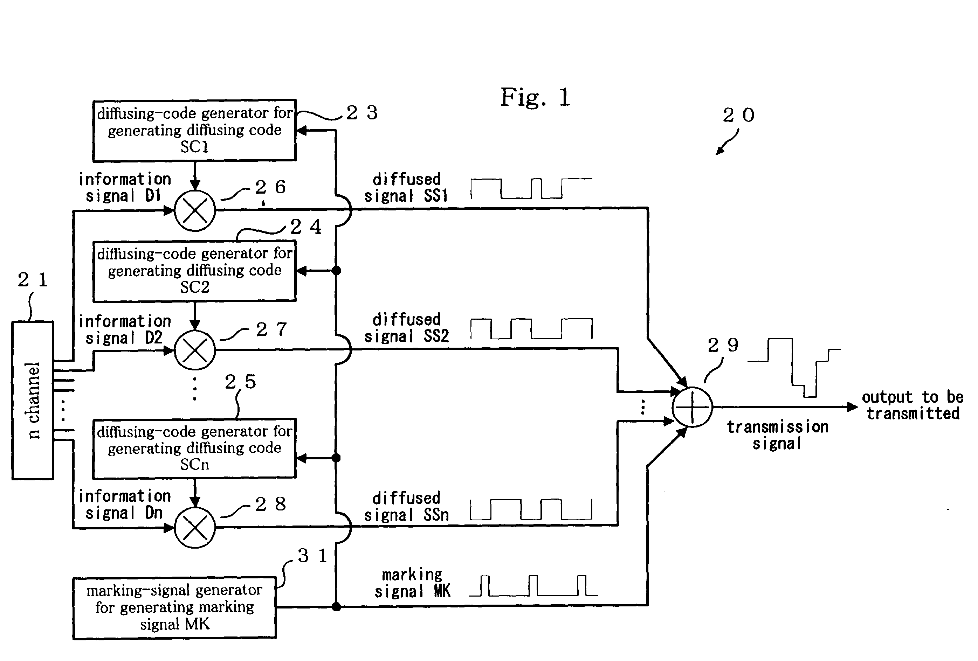

An embodiment of a wired spread spectrum communication apparatus and a communication method according to the present invention will now be described with reference to Figs. 1 to 11.

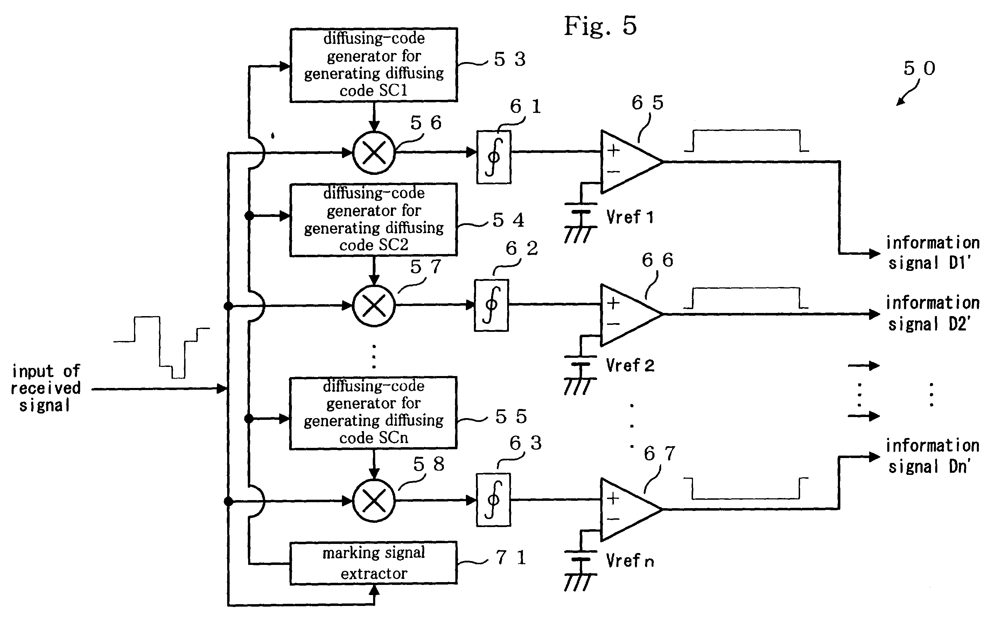

The communication apparatus according to the embodiment of the present invention is a CDMA communication apparatus incorporating a transmission unit 20 and a receiving unit 50. Fig. 1 shows the structure of the transmission unit 20 of the CDMA communication apparatus. Fig. 5 shows the structure of the receiving unit 50. The blocks of transmission unit 20 and the receiving unit 50 are illustrated.

As shown in Fig. 1, the transmission unit 20 comprises a main channel port 21, spreading-code generators 23, 24 and 25, multipliers 26, 27 and 28, an adder 29 and a marking-signal generator 31. The transmission unit 20 multiplexes information signals D1 to Dn of a plurality of channels (1, 2, ..., n) which are input to the main channel port 21 by the CDMA thereof. Then, the transmission unit 20 outputs the information signals D1 to Dn as transmission signals to an electric line serving as a transmission line.

The main channel port 21 assigns the plural information signals D1 to Dn to input ports of the corresponding channels so as to enable the information signals D1 to Dn to be multiplied with the corresponding spreading codes SC1 to SCn. The main channel port 21 is, for example, a terminal group.

The spreading-code generator 23 is structured to be capable of generating a predetermined spreading code SC1 corresponding to the channel 1. Similarly, the spreading-code generator 24 generates the spreading code SC2 corresponding to the channel 2. The spreading-code generator 25 generates the spreading code SCn corresponding to the channel n. That is, the spreading-code generators are provided by the number corresponding to the number of the plural channels. Therefore, a different spreading code for each channel can be supplied. Note that the spreading codes SC1 to SCn are formed into code sequences which do not easily interfere with one another.

The multiplier 26 is structured to be capable of multiplying the spreading code SC1 supplied from the spreading-code generator 23 and the information signal D1 of the channel 1 with each other so as to generate a spread signal SS1. That is, the information signal D1 of the channel 1 is multiplied with the spreading code SC1 supplied from the spreading-code generator 23 so that the spectrum of the information signal D1 is spread by the spreading code SC1. Thus, the information signal D1 is converted into the spread signal SS1. Similarly, the multiplier 27 multiplies the spreading code SC2 supplied from the spreading-code generator 24 corresponding to the channel 2 and the information signal D2 of the channel 2 with each other. The multiplier 28 multiplies the spreading code SCn supplied from the spreading-code generator 25 corresponding to the channel n and the information signal Dn of the channel n with each other. Thus, spread signals SS2 and SSn are generated. As a result, the spectrums of the information signals D1 to Dn of the channels 1 to n are spread with the individual spreading codes SC1 to SCn. Thus, the information signals D1 to Dn can be divided into signals which do not easily interfere with one another.

The adder 29 is structured to be capable of adding the spread signals SS1 to SSn of the corresponding channels 1 to n so as to synthesize the transmission signal. That is, all of the spread signals SS1 to SSn having the spectrums spread by the spreading codes SC1 to SCn are added so that a stepped signal waveform is generated. The foregoing signal is, as a transmission output, transmitted to the electric line which is a transmission line (not shown). As a result, the transmission signal, which is a digital signal, can directly be transmitted to the electric line which is a transmission line (not shown). That is, the frequency band of the spreading code can directly be used as the transmission frequency band of the transmission signal. Therefore, a necessity for the transmission side to multivalue-modulate information signals of the plural channels before the diffusion is performed can be eliminated as distinct from the CDMA adapted to the wireless communication. As a result, the modulation circuit for performing the multi-value modulation is not required. Moreover, undesirable vertical spread of the spread signal across the carrier wave in the form of an electric wave can be prevented.

When the adder 29 has no transmission means for transmitting the transmission signal (the spread signal), a buffer amplifier or the like may be disposed in the rear of the adder 29, that is, a position between the adder 29 and the electric line which is a transmission line. Hence it follows that the load which must been borne by the adder 29 to produce an output can be reduced. In addition, the output can variably be produced to be adaptable to the transmission line.

Moreover, also the receiving side does not require a demodulation circuit (for example, a heterodyne wave-detecting circuit) for demodulating the transmission signals to the information signals of the plural channels after the inverse diffusion process has been performed. It leads to a fact that a CDMA can be realized with a relatively simple structure.

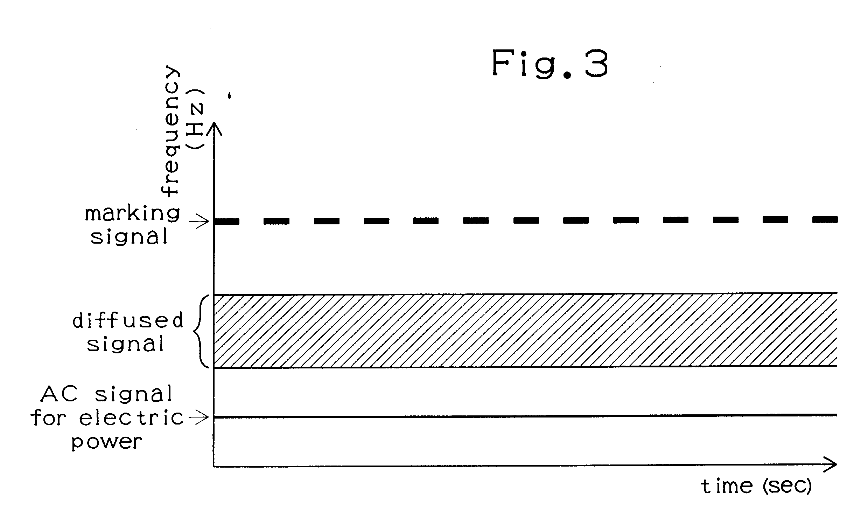

The marking-signal generator 31 is structured to be capable of generating a synchronizing signal which is generated at a predetermined period (frequency example, a period which synchronizes the frame of the information signal). A marking signal MK of the marking-signal generator 31 is expressed by, for example, presence of a predetermined sine wave signal. The marking signal MK is added to the spread signals SS1 to SSn by the adder 29 so that the marking signal MK constitutes a portion of the transmission signal. That is, the marking signal MK is constituted by performing ASK (Amplitude Shift Keying) modulation which is a kind of amplitude modulation. The marking signal MK is combined with the spread signals SS1 to SSn by the adder 29 so that addition of the marking signal MK to the frequency (in this embodiment, a frequency higher than the spread signal band) which is different from the spread signals SS1 to SSn is permitted, as shown in Fig. 3. When the frequency of the clock for generating the spreading code is N times, no influence is exerted on the information signal.

The marking signal MK is supplied to the spreading-code generators 23, 24 and 25 to generate the spreading code in synchronization with the marking signal MK. Thus, the marking signal MK is generated in synchronization with the leading end or the trailing end of the frame of each of the information signals D1 to Dn. As a result, start timing of the signal frame can be detected in accordance with start or end timing of the marking signal MK. When the receiving side performs synchronization in agreement with the marking signal MK, frames can easily be synchronized with each other. If the synchronization is lost owing to, for example, reduction in the signal level during communication, the synchronization can again be captured regardless of the position by using the marking signal MK after the signal level has been restored. Note that the period of synchronization of the marking signal is not limited to the frame of the information signal. The period may be made to be synchronized with the spreading code sequence or the spread signal.

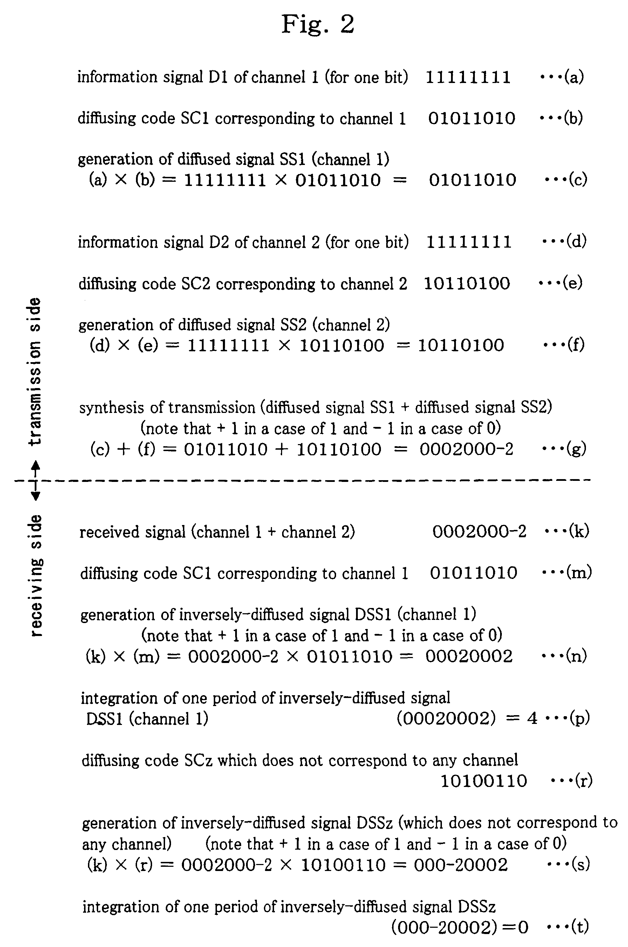

A method of synthesizing a transmission signal from a plurality of information signals will now be described with reference to Fig. 2. To simplify the description, a state will now be described in which division and multiplexing of two information signals (channels 1 and 2) are performed.

Note that information 1 or 0 for one bit of an information signal D1 of the channel 1 is expressed by [11111111] (when information is 1) or [00000000] (when information is 0) (see Fig. 2 (a)) . Similarly, information 1 or 0 for one bit of an information signal D2 of the channel 2 is expressed by [11111111] (when information is 1) or [00000000] (when information is 0) (see Fig. 2 (d)).
(1) Initially, the spectrum of the information signal D1 is spread by using a predetermined spreading code SC1 so that a spread signal SS1 is obtained. Assuming that the spreading code SC1 supplied from the spreading-code generator 23 is [01011010] (see Fig. 2 (b)), the spread signal SS1 of the channel 1 is generated as follows: information [11111111] for one bit of the information signal D1 and the spreading code SC1 [01011010] are multiplied, that is, [11111111] × [01011010]. Thus, the spread signal SS1 [01011010] can be generated (see Fig. 2 (c)).
(2) At the same time, at which the process (1) is performed, the spectrum of the information signal D2 is spread by using a predetermined spreading code SC2 so that a spread signal SS2 is obtained. Assuming that the spreading code SC2 supplied from the spreading-code generator 24 is [10110100] (see Fig. 2 (e)), the spread signal SS2 of the channel 2 is generated as follows: information [11111111] for one bit of the information signal D2 and the spreading code SC2 [10110100] are multiplied, that is, [11111111] × [10110100]. Thus, the spread signal SS2 [10110100] can be generated (see Fig. 2 (f)).
(3) Then, the spread signals SS1 and SS2 for two channels are synchronized so that a transmission signal is obtained. Then, the generated spread signal SS1 and the spread signal SS2 are added. That is, [01011010] + [10110100] so that a transmission signal [0002000-2] is synchronized (see Fig. 2 (g)).

Since the calculation is performed such that [0] is replaced by - 1, the following results of the calculations are obtained: [0) + [1] = [0], [0] + [0] = [- 2] and [1] + [1] = [2].

The thus-synchronized transmission signal [0002000-2] is directly transmitted to the electric line which is the transmission line. Then, the transmission signal is received by the receiving unit 50 to be described later.

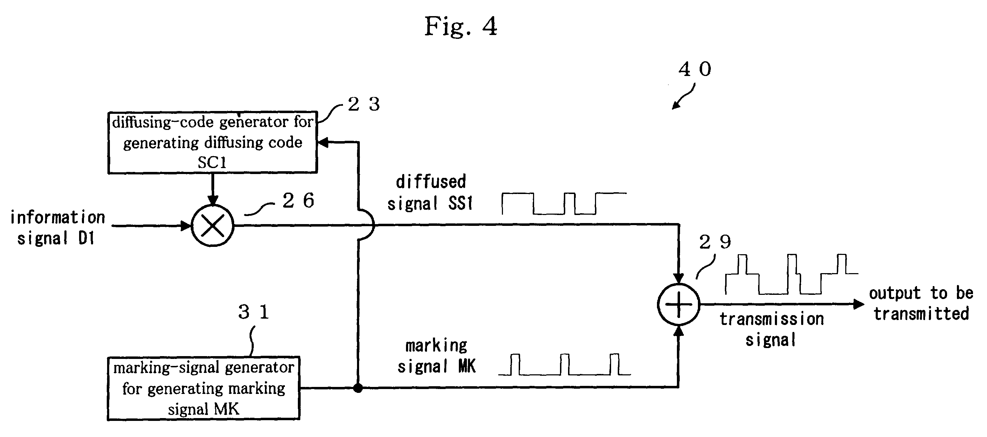

When the main channel port 21, the spreading-code generator 24 and 25 and the multipliers 27 and 28 are omitted from the structure of the transmission unit 20 shown in Fig. 1, a transmission unit 40 of a spread spectrum communication apparatus which is structured such that the number of the channel is one, that is, which is not multiplexed, can be constituted (see Fig. 4). When the foregoing structure is employed, the transmission signal, which is a digital signal, can directly be transmitted to the electric line which is the transmission line. Therefore, the frequency band used by the spread signal can directly be used as the transmission frequency band for the transmission signal. Therefore, the transmission side is not required to modulate the information signal similarly to the wireless spread spectrum communication method. Thus, a primary modulation circuit is not required. Moreover, undesirable vertical spread of the spread signal across the carrier wave in the form of an electric wave can be prevented.

As shown in Fig. 5, the receiving unit 50 comprises spreading-code generators 53, 54 and 55, multipliers 56, 57 and 58, integrators 61, 62 and 63, comparators 65, 66 and 67 and a marking signal extractor 71. The receiving unit 50 has a function to inversely spread the received signal input from the electric line which is the transmission line. Then, the receiving unit 50 decodes information signals D1' to Dn' of the corresponding channels.

The spreading-code generator 53 is structured to be capable of generating the spreading code SC1 which is the same as that generated by the spreading-code generator 23 to inversely spread the information signal D1 corresponding to the channel 1. The spreading code SC1 is generated in synchronization with the timing of the marking signal MK extracted by the marking signal extractor 71. Because of the same reason, the spreading-code generator 54 generates the spreading code SC2 corresponding to the channel 2, while the spreading-code generator 55 generates the spreading code SCn corresponding to the channel n. That is, the spreading-code generators are provided by the number corresponding to the number of the channels.

The multiplier 56 is structured to be capable of multiplying the spreading code SC1 supplied from the spreading-code generator 53 and the received signal with each other to generate an inversely-spread signal DSS1. That is, the spreading code SC1 supplied from the spreading-code generator 53 is the same code sequence as the spreading code SC1 obtained by spreading the spectrum of the information signal D1 of the channel 1. Therefore, the spreading code SC1 and the received signal are multiplied with each other so that inverse diffusion using the spreading code SC1 is performed. Thus, the received signal is converted into the inversely-spread signal DSS1. Similarly, the multiplier 57 multiplies the spreading code SC2 supplied from the spreading-code generator 54 corresponding to the channel 2 and the received signal with each other. The multiplier 58 multiplies the spreading code SCn supplied from the spreading-code generator 55 corresponding to the channel n and the received signal with each other. Thus, inversely-spread signals DSS2 and DSSn are generated. As a result, the received signal is supplied into inversely-spread signals DSS1 to DSSn for the corresponding channels.

The integrator 61 is structured to be capable of integrating the inversely-spread signal DSS1 in a quality of one period of the information signal constituted by one bit of the information signal. Thus, an integrated value of each bit of the information signal can sequentially be obtained from the inversely-spread signal DSS1. When combination with the comparator 65 to be described later is employed, the information signal D1' of the channel 1 is decoded in accordance with the integrated value. The integrator 62 integrates the inversely-spread signal DSS2 in a quantity of one period of the information signal constituted by one bit of the information signal. The integrator 63 integrates the inversely-spread signal DSSn in a quantity of one period of the information signal constituted by one bit of the information signal. When also the integrator 63 is combined with the comparator 66 or the comparator 67, the information signals D2' and Dn' of the channel 2 and the channel n are decoded. When the region of one bit of the information signal is sectioned into n sections to perform the diffusion such that the spreading code is caused to correspond a plurality times n, each of the sections n constituting the one bit period of the information signal is integrated, that is, n periods constituting the one bit period is integrated. Thus, code diffusion is furthermore finely performed, causing noise resistance which is the characteristic of the spread spectrum communication to furthermore be improved.

The comparator 65 is structured to be capable of producing an output of a H level or a L level in accordance with whether or not the input voltage is higher than reference voltage Vref1. That is, the comparator 65 makes a comparison of the integrated value which has been calculated by the integrator 61 and which is an analog signal to determine whether or not the integrated value is larger than a predetermined voltage. Then, the comparator 65 performs conversion to a digital signal "1" or "0", that is, decoding to the information signal D1'. Similarly, the comparator 66 determines whether or not the integrated value calculated by the integrator 62 is larger than the reference voltage Vref2. The comparator 67 determines whether or not the integrated value calculated by the integrator 63 is larger than the reference voltage Vrefn. Thus, each of the comparators 66 and 67 output H level or L level. In this case, the reference voltages Vref1, Vref2 and Vrefn of the comparator 65, 66 and 67 are set to be 0 V. The foregoing comparators may be structured to determine whether or not the input voltages are smaller than the reference voltage, that is, the predetermined voltage so as to output the H level or the L level.

As a result of the foregoing simple structure in which the information signals D1' to Dn' of the corresponding channels and the comparators 61, 62 and 63 are combined with one another permits information signals information signals D1' and Dn' to easily be extracted from the inversely-spread signals DSS1 to DSSn. Since decoding of the one bit can be performed by using only the results of the comparisons between the integrated values of the integrators 61, 62 and 63 and the predetermined voltage, decoding can be performed if complete data in the one period of the bit region cannot be obtained. Therefore, a wired CDMA can be realized with a relatively simple structure. Since Gaussian noise or the like is eliminated by smoothing the waveform by performing the integration, an influence of the signal noise is not easily exerted. Since the signal components of the other channels can be removed, the signal component of a required channel can efficiently be extracted.

The marking signal extractor 71 is constituted by, for example, a filter which is capable of extracting the marking signal MK from the received signal. The extracted marking signal MK is supplied to the spreading-code generators 53, 54 and 55. Then, the spreading-code generators 53, 54 and 55 are able to supply the spreading codes SC1 to SCn to the multipliers 56, 57 and 58 while frames are being synchronized with the marking signal MK. Therefore, the frames can easily be synchronized thanks to the marking signal MK. If the synchronization is temporarily lost in an initial state of the communication or during the communication, synchronization can quickly be captured as compared with capturing of the synchronization by detecting the correlation value.

Referring back to Fig. 2, a method of decoding the information signal D1' which is employed when the transmission signal [0002000-2] synthesized by the above-mentioned method of synthesizing the transmission signal will now be described. The method has the following steps (5) to (7).
(5) Initially, signal components of the channel 1 of the received signal [0002000-2] (see Fig. 2 (k)) are inversely spread so that an inversely-spread signal DSS1 is obtained. Assuming that the spreading code SC1 supplied from the spreading-code generator 53 is [01011010] (see Fig. 2 (m)), the inversely-spread signal DSS1 of the channel 1 is generated as follows: multiplication of the received signal [0002000-2] and the spreading code SC1 [01011010] is performed, that is, [0002000-2] × [01011010] so that the inversely-spread signal DSS1 [00020002] is generated (see Fig. 2 (n)).
(6) Then, one period of the inversely-spread signal DSS1 is integrated. That is, weights of each bit in one period of the inversely-spread signal DSS1 [00020002] generated by the inverse diffusion, that is, the weights are accumulated from the upper bit to the lower bit in the bit region "........". Thus, 0 (0 + 0) → 0 (0 + 0) → 0 (0 + 0) → 2 (0 + 2) → 2 (2 + 0) → 2 (2 + 0) → 2 (2 + 0) → 4 (2 + 2) so that the integrated value is four (see Fig. 2 (p)).
(7) A comparison of the voltage of an analog signal corresponding to the integrated value "4" with the reference voltage Vref1 by the comparator 65. That is, this embodiment is structured such that whether or not the voltage is higher than 0 V, that is, whether or not the integrated value is larger than "0" is determined by comparison. Since the integrated value "4" is larger than "0", the comparator 65 outputs a H level, that is, "1". Thus, decoding of one bit of the information signal D1' is completed.

A state will now be described in which the foregoing method of decoding the received signal is arranged such that another spreading code SCz (for example, [10100110] (see Fig. 2 (r)) is used to inversely spread the [0002000-2] (see Fig. 2(k)) as a substitute for the spreading code SC1 of the channel 1 and the spreading code SC2 of the channel 2. As can be understood from Fig. 2, when multiplication of the received signal [0002000-2] and the other spreading code SCz [10100110], that is, [0002000-2] × [10100110] has resulted in generation of an inversely-spread signal DSSz [000-20002] (see Fig. 2 (s), the integrated value is "0" (see Fig. 2 (t)). Since the spreading code has orthogonality, no influence is exerted on the other channels.

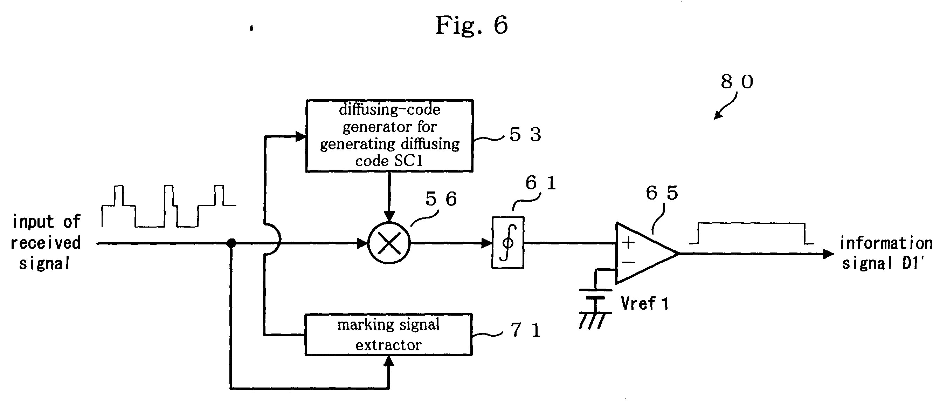

When the spreading-code generators 54 and 55, the multipliers 57 and 58, the integrators 62 and 63 and the comparators 66 and 67 are omitted from the structure of the receiving unit 50 shown in Fig. 5, a receiving unit 80 of a spread spectrum communication apparatus which is structured such that the number of the channel is one, that is, which is not multiplexed, can be constituted (see Fig. 6). Also in a case where the foregoing structure is employed, any demodulation circuit (for example, a heterodyne wave-detecting circuit) for demodulating the received signal after the inverse diffusion process is not required. Since decoding of the one bit can be performed by using only the results of the comparisons between the integrated value calculated by the integrator 61 and the predetermined reference voltage, decoding can be performed if complete data in the one period of the bit region cannot be obtained. Therefore, the spread spectrum communication can be realized with a relatively simple structure. Since the Gaussian noise or the like is eliminated by smoothing the waveform by performing the integration, an influence of the signal noise is not easily exerted. The signal component of a required channel can efficiently be extracted.

As described above, according to this embodiment, the transmission unit 20 incorporates the spreading-code generators 23, 24 and 25, the multipliers 26, 27 and 28 and the adder 29. Thus, the information signals D1 to Dn of the plural channels are multiplied with the corresponding predetermined "spreading codes SC1 to SCn so as to be converted into the spread signals SS1 to SSn. Then, the spread signals SS1 to SSn are added to one another so as to be synthesized as the transmission signal. Therefore, the information signals D1 to Dn of the plural channels can directly be spread to obtain the transmission signal. Therefore, the transmission signal, which is the digital signal, can directly be transmitted to the electric line which is the transmission line. Since the diffusion is performed after multi-value modulation of the information signals of the plural channels as distinct from the CDMA adapted to the wireless communication, the modulation circuit for performing the multi-value modulation is not required. As a result, an effect can be obtained in that a wired CDMA can be realized with a relatively simple structure.

In this embodiment, the receiving unit 50 incorporates the spreading-code generators 53, 54 and 55, the multipliers 56, 57 and 58, the integrators 61, 62 and 63 and the comparators 65, 66 and 67. Therefore, the signals received from the electric line are multiplied with the spreading codes SC1 to SCn in the corresponding channels so as to be formed into the inversely-spread signals DSS1 to DSSn. Then, at least one period of each bit region of the information signal is integrated. Whether or not the integrated value is larger than the predetermined value is determined by making a comparison. Then, decoding to the information signals is performed such that one period of the inversely-spread signals DSS1 to DSSn corresponding to each bit of the information signal is integrated so that the information signals d1' to Dn' are extracted from the inversely-spread signals DSS1 to DSSn. Therefore, an effect can be obtained in that a wired CDMA can be realized with a relatively simple structure. Since Gaussian noise or the like is removed by smoothing the waveform by performing the integration, an influence of signal noise is not easily exerted. Since the signal components of the other channel can be removed, an effect can be obtained in that the signal components of a required channel can efficiently be extracted.

In this embodiment, the transmission unit 20 incorporates the marking-signal generator 31 and the adder 29. Thus, the marking signals synchronized with the information signals D1 to Dn, the spreading codes SC1 to SCn or the spread signals SS1 to SSn are added to the spread signals SS1 to SSn by the adder 29 so that results of the addition are transmitted to the electric line. Therefore, the receiving unit 50 does not employ the synchronization capturing method using detection of the correlation value. The receiving unit 50 is able to extract the marking signal from the signal received from the electric line so that easy capturing of the synchronization in accordance with the timing of the marking signal transmitted at the predetermined period is permitted. The synchronizing method with which the synchronization waveform is detected to synchronize the frames in the initial state and the edge of the received waveform is detected during the operation to synchronize the clocks which encounters the problems (a problem that the synchronization of the frames lost during the communication cannot be restored and a problem that synchronization of the clocks cannot be established because the edge of the received waveform frequently disappears owing to an adverse environment and the like). The structure according to this embodiment is able to cope with the foregoing problems. As a result, an effect can be obtained in that the wired CDMA can be realized with a relatively simple structure. Since the synchronization can be captured by the method with which the marking signal is extracted from the signal received from the electric line, an effect can be obtained in that a CDMA can be realized which is capable of quickly capturing the synchronization as compared with the synchronization capturing method using detection of the correlation value. Thus, another effect can be obtained in that the wired CDMA can be realized to be adaptable to a packet communication system with which communication period of time per packet is considerably short.

As described above, the transmission unit 40 incorporates the spreading-code generator 23 and the multiplier 26. As a result, the transmission signal, which is a digital signal, can directly be transmitted to the electric line which is a transmission line. Therefore, the frequency band of the spreading code can directly be used as the transmission frequency band of the transmission signal. Thus, a necessity for the transmission side to modulate information signals before the diffusion is performed can be eliminated as distinct from the CDMA adapted to the wireless communication. As a result, the primary modulation circuit is not required. Thus, an effect can be obtained in that the spread spectrum communication can be realized with a relatively simple structure.

In this embodiment, the receiving unit 80 incorporates the spreading-code generator 53, the multiplier 56, the integrator 61 and the comparator 65. Thus, the demodulation circuit (for example, a heterodyne wave-detecting circuit) is not required which performs the demodulation to the information signals after the signal received from the electric line has been inversely spread. Since decoding of the one bit can be performed by using only the results of the comparisons between the integrated value obtained by the integrator 61 and the predetermined voltage, decoding can be performed if complete data in the one period of the bit region cannot be obtained. Therefore, wired spread spectrum communication can be realized with a relatively simple structure. Since Gaussian noise or the like is eliminated by smoothing the waveform by performing the integration, an influence of the signal noise is not easily exerted. Thus, the signal component of a required channel can efficiently be extracted.

In this embodiment, the transmission unit 40 incorporates the marking-signal generator 31 and the adder 29. As a result, the marking signal synchronized with any one of the information signal D1, the spreading code SC1 or the spread signal SS1 is added to the spread signal SS1 by the adder 29 so as to be transmitted to the electricline. Therefore, the receiving unit 80 does not require the synchronization capturing method using detection of the correlation value. That is, the marking signal is extracted from the signal received from the electric line so that easy capturing of the synchronization in accordance with the timing of the marking signal supplied in the predetermined period is permitted. That is, any special circuit having a relatively large circuit size for detecting the predetermined correlation value is not required. Therefore, synchronization can be established by a relatively simple circuit (for example, the filter circuit) arranged to detect the timing of the marking signal. Hence it follows that an effect can be obtained in that the wired spread spectrum communication can be realized with a relatively simple structure.

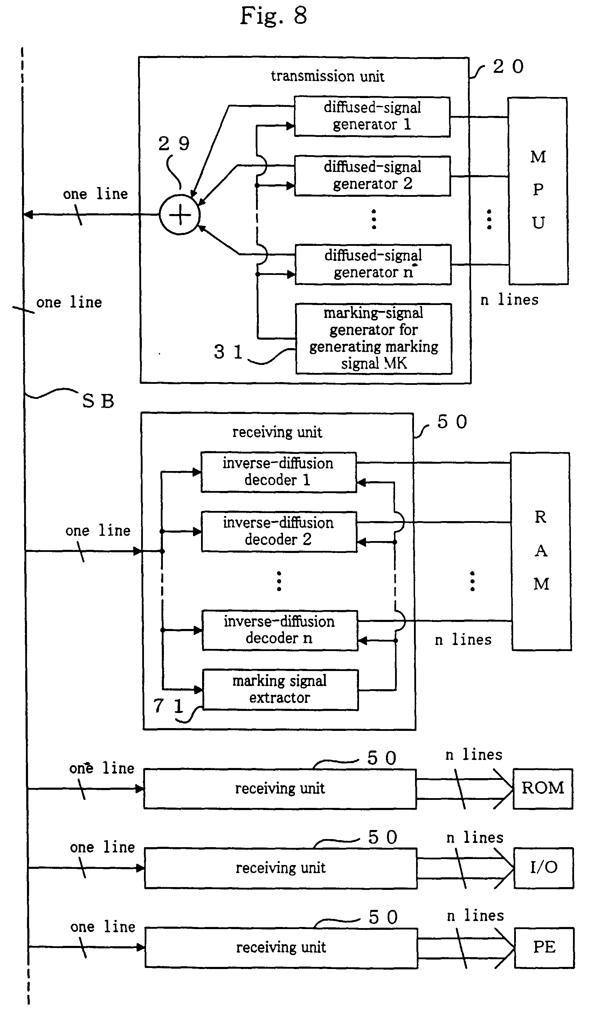

An example of the system incorporating the transmission unit 20 and the receiving unit 50 will now be described with reference to Figs. 8 to 11.

The system shown in Fig. 8 is an example of a system bus of a computer incorporating the transmission unit 20 and the receiving unit 50. That is, data in the form of parallel signals which is, through the system bus, communicated among the calculating unit (an MPU), a storage unit (RAM and ROM), an input/output unit (I/O) and a peripheral unit (PE) is multiplexed as data in the form of the information signals D1 to Dn for each channel. Thus, the system buses for establishing the connection among the MPU and the RAM are unified.

Usually, the system bus of a computer is structured to be adaptable to the number of bits which constitute one word which is a calculation unit. Therefore, the system bus is constituted by, in parallel, bundling a plurality of signal lines (for example, 32 signal lines). Hence it follows that the RAM, the ROM, the I/O and the PE and the MPU, which is the central unit, must be connected to one another through a plurality of signal lines.

Since the information society has come realized by the Internet which is a core system, the computer also serves as an important portable information terminal. Although reduction in the size and weight of the computer are considerably required, the presence of the system bus constituted by the plural signal lines inhibits the size reduction of the computer. Specifically, the system bus is exemplified by the wiring pattern among function blocks in a semiconductor integrated circuit, the printed circuits for establishing the connections between the MPU and the RAM and between the MPU and the ROM formed on a system bus and cables for establishing the connections between the main substrate, on which the foregoing units are mounted, and the I/O and between the main substrate and the PE (a secondary strength unit, a communication control unit or the like).

Therefore, a structure as shown in Fig. 8 is employed in which the transmission unit 20 and the receiving unit 50 are interposed among the MPU, the RAM, the ROM, the I/O and the PE. Thus, the system buses SB for establishing the foregoing units can be unified so that the foregoing problem is overcome.

That is, a structure as shown in Fig. 8 is employed in which the transmission unit 20 is disposed between the MPU and the system bus SB. Moreover, the receiving unit 50 is disposed between the system bus SB and each of the RAM, ROM, I/O and the PE. The transmission unit 20 incorporates the spread-signal generators 1 to n corresponding to the number (n) of the signal lines which are outputs from the MPU. Thus, the transmission unit 20 multiplexes data (information signals D1 to Dn) transmitted from the MPU and formed into an n-bit structure by a CDMA using spread signals assigned to each RAM, ROM, I/O and the PE, respectively so as to transmit the multiplexed signals to the system bus SB. Therefore, parallel data transmitted from the MPU and formed into the n-bit structure can be transmitted to one system bus SB as serial data. Note that the spread-signal generator 1 is a concept incorporating the spreading-code generator 23 and the multiplier 26. The spread-signal generator 2 is a concept incorporating the spreading-code generator 24 and the multiplier 27. The spread-signal generator n is a concept incorporating the spreading-code generator 25 and the multiplier 28 (see Fig. 1).

On the other hand, the receiving unit 50 disposed between the system bus SB and each unit, that is, the RAM, the ROM, the I/O and the system bus SB incorporates inverse-diffusion decoders 1 to n which correspond to the number (n) of the signal lines which are output to the RAM and the like. Thus, serial data multiplexed by the CDMA and supplied from the system bus SB is inversely spread with the spreading codes assigned to the RAM, the ROM, the I/O and the PE so that the signal is separated. Then, the information signals D1' and Dn' for each bit are decoded so as to be transmitted to the RAM, the ROM and the like. Therefore, serial data supplied from the system bus SB can be restored to parallel data in the form of the n-bit structure to communicate the same with the RAM, the ROM and the like. The inverse-diffusion decoder 1 is a concept incorporating the spreading-code generator 53, the multiplier 56, the integrator 61 and the comparator 65. The inverse-diffusion decoder 2 is a concept incorporating the spreading-code generator 54, the multiplier 57, the integrator 62 and the comparator 66. The inverse-diffusion decoder n is a concept incorporating the spreading-code generator 55, the multiplier 58, the integrator 63 and the comparator 67 (see Fig. 1).

As described above, the transmission unit 20 is disposed between the MPU and the system bus SB and the receiving unit 50 is disposed between the system bus SB and each of the RAM, the ROM, the I/O and the PE. As a result, the parallel data transmitted from the MPU and formed into the n-bit structure can be transmitted to one system bus SB as serial data. Moreover, serial data supplied from the system bus SB can be restored to the parallel data formed into the n-bit structure so as to be communicated to the RAM, the ROM and the like. Thus, a unified system bus can be realized. As a result, the area required to wire or lay the system buses in the semiconductor integrated circuit, on the surface of the substrate or in the apparatus can considerably be reduced. Therefore, an effect can be obtained in that the size and weight of the computer can be reduced.

In the foregoing example of the system, the transmission unit 20 is disposed between the MPU and the system bus SB and the receiving unit 50 is disposed between the system bus SB and each of the RAM, the ROM, the I/O and the PE. The positions are not limited to the foregoing positions. For example, the receiving unit 50 may be disposed between the MPU and the system bus SB. Moreover, the transmission unit 20 may be disposed between the system bus SB and each of the RAM, the ROM, the I/O and the PE. Thus, the system buses can be unified when data is transmitted from the RAM, the ROM, the I/O or the PE to the MPU.

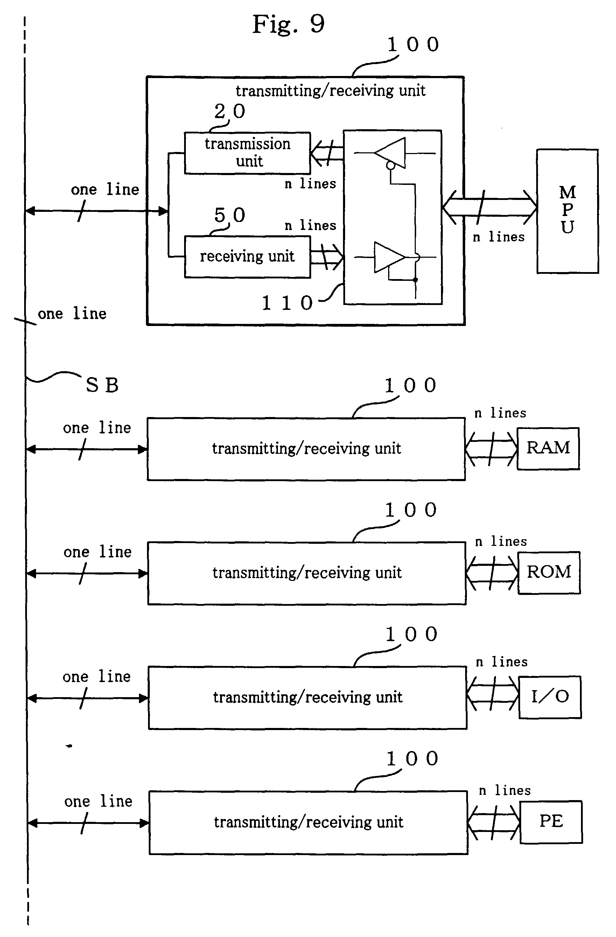

As shown in Fig. 9, a transmitting/receiving unit 100 formed by integrating the transmission unit 20 and the receiving unit 50 may be disposed between the system bus SB and each of the MPU, the RAM, the ROM, the I/O and the PE. In the foregoing case, the transmitting/receiving unit 100 incorporates a selector 110 for switching the input of the parallel signal to the transmission unit 20 and the output of the parallel signal from the receiving unit 50. Thus, interference of the input/output signals can be prevented even if the transmission unit 20 and the receiving unit 50 are combined with each other. Therefore, the parallel signal line can commonly be used. When a selector (not shown) for switching the output of the serial signal from the transmission unit 20 and the input of the serial signal to the receiving unit 50 is provided, also interference of the signals which are input/output to and from the transmission unit 20 and the receiving unit 50 can be prevented. Thus, the serial signal line can commonly be used. As a result, unification of the data buses is permitted when data is bidirectionally communicated. Hence it follows that an effect can be obtained in that the size and weight of the computer can be reduced.

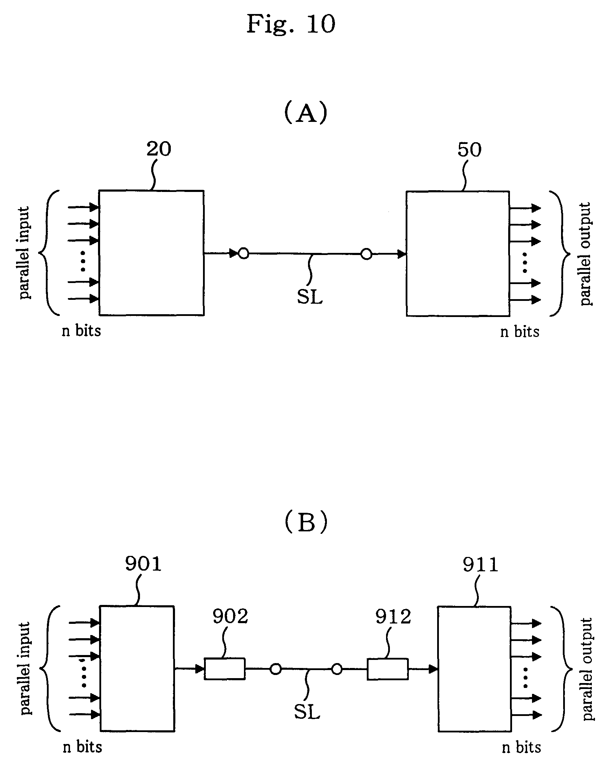

An example of the system shown in Fig. 10 (A) is structured such that a serial-parallel converter is constituted by using the transmission unit 20. Moreover, the parallel-serial converter is constituted by the receiving unit 50.

As shown in Fig. 10 (B), a conventional parallel-serial converter 901 stores the parallel signal into a serial buffer 902. Then, the parallel-serial converter 901 converts the parallel signal into the serial signal to transmit the serial signal to a serial signal line SL. A serial-parallel converter 911 causes the thus-transmitted serial signals to be fetched into the serial buffer 912 starting with the leading end signal. After all of data items constituting the parallel data have been obtained, data above is output as a parallel signal.

As compared with the parallel transmission of n bits in which the signal lines are present by the number corresponding to the number (for example, n) of the parallel signals, the serial transmission requires at least transmission time which is n-times long. The reason for this lies in that the transmission side sequentially stores the parallel signals into the serial buffer 902 and the receiving side waits for a moment of time at which all of the data items are obtained.

Therefore, as shown in Fig. 10 (A), the transmission unit 20 is employed as a substitute for the parallel-serial converter 901 and the serial buffer 902. Moreover, the receiving unit 50 is employed as a substitute for the serial-parallel converter 911 and the serial buffer 912. Thus, the foregoing problem can be overcome.

That is, the transmission unit 20 incorporates the spread-signal generators by the number corresponding to the number (n) of the signal lines which are parallel inputs. Thus, the parallel data (the information signals D1 to Dn) formed into the n-bit structure is multiplexed by CDMA so as to transmit the multiplexed data to the serial signal line SL. Thus, parallel data in the form of the n-bit structure can be processed by a parallel signal process to transmit the processed data to the serial signal line SL as serial data. Note that the spread-signal generator is a concept incorporating the foregoing spreading-code generator and the multiplier.

On the other hand, the receiving unit 50 incorporates the inverse-diffusion decoders by the number corresponding to the number (n) of the signal lines which are parallel outputs produced after the conversion. Thus, when the receiving unit 50 has received serial data multiplexed by the CDMA from the serial signal line SL, the receiving unit 50 inversely spreads the serial data so as to separate the signal. Then, the information signals D1' to Dn' for each bit are decoded so as to be output as parallel data. Thus, serial data supplied from the serial signal line SL can be processed by the parallel signal process to convert serial data into parallel data in the form of the n-bit structure in order to output parallel data. Note that the inverse-diffusion decoder is a concept incorporating the foregoing spreading-code generator, the multiplier, the integrator and the comparator.

As described above, the transmission unit 20 is employed as a substitute for the parallel-serial converter 901 and the serial buffer 902. Moreover, the receiving unit 50 is employed as a substitute for the serial-parallel converter 911 and the serial buffer 912. Thus, parallel signal processes are performed to realize the parallel-serial conversion and the serial-parallel conversion. As a result, a necessity for waiting for a predetermined time can be eliminated as distinct from the conventional parallel-serial converter 901 and the serial-parallel converter 911. The parallel-serial conversion and the serial-parallel conversion can sequentially be performed. Hence it follows that an effect can be obtained in that high-speed data conversion can be realized between parallel data and serial data.

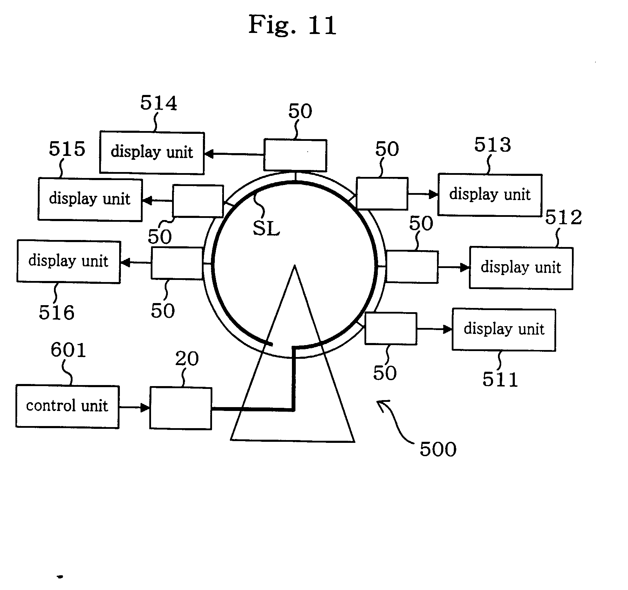

Fig. 11 shows an example of the system which is a control line for a large-scale unit (for example, a display unit for a Ferris wheel) incorporating the transmission unit 20 and the receiving unit 50.

The control line for a large-scale unit, such as the display unit for a Ferris wheel 500 shown in Fig. 11, must have a large number of electric lines. It leads to a fact that the pipes for laying the lines must have large sizes. Thus, there arises a problem in that the costs of the facilities and maintenance cannot be reduced.

Therefore, the transmission unit 20 is disposed between a control unit 601 and a serial signal line SL. Moreover, the receiving unit 50 is disposed between the serial signal line SL and the display units 511 to 516. Thus, the serial signal lines SL are unified to overcome the above-mentioned problem.

That is, a control signal transmitted from the control unit 601 is multiplexed by the CDMA using the spreading codes assigned to the display units 511 to 516 to transmit the multiplexed signal to one serial signal line SL. The display units 511 to 516 receive the multiplexed control signals received from the serial signal line SL to inversely spread the control signals with the spreading codes assigned to the display units 511 to 516 to separate the signals. The display units 511 to 516 are able to decode only the corresponding control signals with the corresponding spreading codes. Therefore, the display units 511 to 516 decode only the corresponding control signals transmitted to the display units 511 to 516 so as to be controlled in a predetermined manner. Thus, the serial signal lines SL for establishing the connections among the control unit 601 and the display units 511 to 516 can be realized by one electric line. Hence it follows that the costs of the facilities and maintenance of the electric lines can be reduced.

When the foregoing structures according to the embodiments (see Figs. 1 to 6) in which the multiplexed control signals (information signals) are supplied to the electric line which is the transmission line, a system which is not required to provide one serial signal line SL can be constituted.

The aspect of the invention incorporates the spreading-code generator, the multiplier and the transmission means. Thus, the information signals are multiplied with predetermined spreading codes so as to be converted into spread signals which are transmitted to the transmission line. Thus, the information signals can directly be spread and transmitted. Therefore, the method of modulating the information signals by the PSK or the like to spread the information signals is not employed as distinct from the wireless spread spectrum communication method. Therefore, the primary modulation circuit is not required. Thus, an effect can be obtained in that the spread spectrum communication can be realized with a relatively simple structure.

The aspect of the invention incorporates the spreading-code generator, the multiplier, the integrator and the comparator. Therefore, the signals received from the transmission line are multiplied with the inversely-spreading codes so as to be formed into the inversely-spread signals. Then, at least one period of the bit region of each bit of the information signal is integrated. Then, whether or not the integrated value is larger than the predetermined value is determined by making a comparison. Thus, decoding to the information signals is performed. At least one period of the inversely-spread signal is integrated for each bit of the information signal so as to extract the information signals from the inversely-spread signals. Therefore, an effect can be realized in that spread spectrum communication can be realized with a relatively simple structure. Since Gaussian noise or the like is removed by smoothing the waveform by performing integration, an influence of signal noise is not easily exerted. As a result, an effect can be obtained in that signal components of a required channel can efficiently be extracted.

The aspect of the invention has the step of multiplying the information signal and the spreading code to generate a spread signal. Then, the spread signal is transmitted to the transmission line. That is, the information signal is directly spread to transmit the spread signal to the transmission line. Therefore, the method of modulating the information signal by PSK or the like before diffusion is performed is not employed as distinct from the wireless spread spectrum method. Thus, any primary modulation circuit is not required. As a result, an effect can be obtained in that spread spectrum communication can be realized with a relatively simple structure.

The aspect of the invention has the steps of multiplying a signal received from the transmission line with a predetermined spreading code to generate an inversely-spread signal; integrating the inversely-spread signal in a quantity of at least one period of the information signal constituted by one bit of the information signal; and making a determination whether or not the integrated value is larger than a predetermined value so that the information signal for each channel is decoded. That is, the generated inversely-spread signal is integrated in a quantity of at least one period constituted by one bit of the information signal to extract the information signal from the inversely-spread signal. Therefore, an effect can be obtained in that the spread spectrum method can be realized with a relatively simple structure. Since Gaussian noise or the like is removed by smoothing the waveform by performing integration, an influence of signal noise is not easily exerted. As a result, an effect can be obtained in that signal components of a required channel can efficiently be extracted.

The aspect of the invention incorporates the synchronizing-signal generator and the transmission means. As a result, the synchronized signal synchronized with anyone of the information signal, the spreading code and the spread signal is transmitted to the transmission line together with the spread signal. Also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line. Therefore, an effect can be obtained in that spread spectrum communication can be realized with a relatively simple structure.

The aspect of the invention has the step of transmitting the synchronized signal synchronized with anyone of, the information signal, the spreading code and the spread signal to the transmission line together with the spread signal. That is, also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line. Therefore, an effect can be obtained in that spread spectrum communication can be realized with a relatively simple structure.

The aspect of the invention incorporates the spreading-code generator, the multiplier and the adder. Thus, each of the information signals of a plurality of channels is multiplied with a predetermined spreading code so as to be converted into the spread signal. Then, the spread signals are added so as to be synthesized as the transmission signals. Thus, the information signals of the plural channels can directly be spread to obtain the transmission signals. Therefore, the method of spreading the information signals of the plural channels after the multi-valued modulation has been performed is not employed as distinct from the CDMA for the wireless communication. As a result, the modulation circuit for the multi-valued modulation is not required. Thus, an effect can be obtained in that a wired CDMA can be realized with a relatively simple structure.

The aspect of the invention incorporates the spreading-code generator, the multiplier, the integrator and the comparator. Thus, the signal for each channel received from the transmission line is multiplied with the inversely-spreading code so as to be formed into the inversely-spread signal. Then, the inversely-spread signal is integrated in a quantity of at least one period constituted by one bit of the information signal. Then, whether or not the integrated value is larger than a predetermined value is determined by making a comparison. The inversely-spread signal is integrated in a quantity of at least one period constituted by one bit of the information signal to extract the information signals from the inversely-spread signals. Therefore, an effect can be obtained in that a wired CDMA can be realized with a relatively simple structure. Since Gaussian noise or the like is removed by smoothing the waveform by performing integration, an influence of signal noise is not easily exerted. Moreover, signal components of the other channels can be removed. As a result, an effect can be obtained in that signal components of a required channel can efficiently be extracted.

The aspect of the invention has the step of multiplying each information signal for each of the plural channels with a corresponding spreading code to generate a spread signal. Then, the spread signals are added and transmitted to the transmission line. That is, the information signals of a plurality of the channels are directly spread and added so as to be transmitted to the transmission line. Therefore, the method of spreading the information signals of the plural channels after the multi-valued modulation has been performed is not employed as distinct from the CDMA for the wireless communication. As a result, the modulation circuit for the multi-valued modulation is not required. Thus, an effect can be obtained in that a wired CDMA can be realized with a relatively simple structure.

The aspect of the invention has the step of multiplying the signal for each channel received from the transmission line with the corresponding spreading code so as to generate the inversely-spread signal. Then, the inversely-spread signal is integrated in a quantity of at least one period constituted by one bit of the information signal. Then, whether or not the integrated value is larger than a predetermined value is determined by making a comparison to decode the information signal for each channel. The inversely-spread signal is integrated in a quantity of at least one period constituted by one bit of the information signal so as to extract the information signals from the inversely-spread signals. Therefore, an effect can be obtained in that a wired CDMA can be realized with a relatively simple structure. Since Gaussian noise or the like is removed by smoothing the waveform by performing integration, an influence of signal noise is not easily exerted. Moreover, signal components of the other channels can be removed. As a result, an effect can be obtained in that signal components of a required channel can efficiently be extracted.

The aspect of the invention incorporates the synchronizing-signal generator and the transmission means. Therefore, the synchronized signal synchronized with any one of the information signal, the spreading code and the spread signal is transmitted to the transmission line together with the spread signal. Also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line. Therefore, an effect can be obtained in that s CDMA can be realized with a relatively simple structure. Since the synchronization can be captured by a method of extracting the marking signal from the signal received from the transmission line, an effect can be obtained in that a CDMA which is capable of quickly capturing the synchronization as compared with the synchronization capturing method using detection of the correlation value can be realized.

The aspect of the invention has the step of transmitting the synchronized signal which is synchronized with any one of the information signal, the spreading code or the spread signal to the transmission line together with the spread signal. That is, also the synchronized signal which is effective for the receiving side to reproduce the signal is transmitted to the transmission line together with the spread signal. Therefore, the synchronization capturing method using detection of the correlation value is not employed by the receiving side to extract the synchronized signal from the signal received from the transmission line. Therefore, an effect can be obtained in that s CDMA can be realized with a relatively simple structure. Since the synchronization can be captured by a method of extracting the marking signal from the signal received from the transmission line, an effect can be obtained in that a CDMA which is capable of quickly capturing the synchronization as compared with the synchronization capturing method using detection of the correlation value can be realized.

Although the invention has been disclosed in the context of a certain preferred embodiments, it will be understood that the present invention extends beyond the specifically disclosed embodiments to other alternative embodiments of the invention. Thus, it is intended that the scope of the invention should not be limited by the disclosed embodiments but should be determined by reference to the claims that follow.

## Claims

1. A wired spread spectrum communication apparatus for transmitting information signals by using a transmission line, said wired spread spectrum communication apparatus comprising:
a spreading-code generator for generating a predetermined spreading code;
a multiplier for generating a spread signal by multiplying said spreading code and said information signal; and
transmission means for transmitting said spread signal to said transmission line.

2. A wired spread spectrum communication apparatus for transmitting information signals by using a transmission line, said wired spread spectrum communication apparatus comprising:
a spreading-code generator for generating a predetermined spreading code;
a multiplier for generating an inversely-spread signal by multiplying a signal received from said transmission line and said spreading code;
an integrator for integrating said inversely-spread signal in a quantity of at least one period of a bit region constituted by one bit of said information signal; and
a comparator for decoding said information signal by making a comparison to determine whether or not an integrated value calculated by said integrator is larger than a predetermined value.

3. A wired spread spectrum communication method of transmitting information signals by using a transmission line, said wired spread spectrum communication method comprising the steps of:
generating a spread signal by multiplying said information signal and a predetermined spreading code; and transmitting said spread signal to said transmission line.

4. A wired spread spectrum communication method of transmitting information signals by using a transmission line, said wired spread spectrum communication method comprising the steps of:
generating an inversely-spread signal by multiplying a signal received from said transmission line with a predetermined spreading code; integrating said inversely-spread signal in a quantity of at least one period of a bit region constituted by one bit of said information signal; and determining whether or not an obtained integrated value is larger than a predetermined value to decode said information signals.

5. A wired spread spectrum communication apparatus for transmitting information signals by using a transmission line, said wired spread spectrum communication apparatus comprising:
a synchronizing-signal generator for generating a synchronized signal synchronized with any one of said information signal, a spreading code for spreading said information signal and a spread signal; and
transmission means for transmitting said synchronized signal together with said spread signal.

6. A wired spread spectrum communication method of transmitting information signals by using a transmission line, said wired spread spectrum communication method comprising the step of:
transmitting a synchronized signal synchronized with any one of said information signal, a spreading code for spreading said information signal and a spread signal to a transmission line together with said spread signal.

7. A wired spread spectrum communication apparatus for transmitting information signals of a plurality of channels by code-division multiple connection through a transmission line, said wired spread spectrum communication apparatus comprising:
spreading-code generators provided to correspond to said channels;
multipliers for multiplying said spreading code supplied from said spreading-code generators and said information signals with one another so to generate spread signals; and
adders for synthesizing a transmission signal by adding said spread signals for corresponding channels to one another.

8. A wired spread spectrum communication apparatus for transmitting information signals of a plurality of channels by code-division multiple connection through a transmission line, said wired spread spectrum communication apparatus comprising:
spreading-code generators provided to correspond to said channels;
multipliers for generating an inversely-spread signal for each channel by multiplying said spreading codes supplied from said spreading-code generator and a signal received from said transmission line;
integrators for integrating said inversely-spread signal in a quantity of at least one period of a bit region constituted by one bit of said information signal; and
comparators for decoding said information signals by making comparisons to determine whether or not integrated values calculated by said integrators are larger than a predetermined value.

9. A wired spread spectrum communication method of transmitting information signals of a plurality of channels by code-division multiple connection through a transmission line, said wired spread spectrum communication method comprising the steps of:
generating spread signals by multiplying information signals of a plurality of channels with corresponding spreading codes; and
adding said spread signals to one another to transmit said added spread signals to said transmission line.

10. A wired spread spectrum communication method of transmitting information signals of a plurality of channels by code-division multiple connection through a transmission line, said wired spread spectrum communication method comprising the steps of:
generating inversely-spread signals by multiplying a signal received from said transmission line with spreading codes corresponding to said channels; integrating said inversely-spread signals for said corresponding channels in a quantity of at least one period of a bit region constituted by one bit of said information signal; and decoding said information signal for said channels by determining whether or not integrated values are larger than a predetermined value.

11. A wired spread spectrum communication apparatus for transmitting information signals of a plurality of channels by code-division multiple connection through a transmission line, said wired spread spectrum communication apparatus comprising:
synchronizing-signal generators for generating synchronized signals synchronized with any one of said information signals, spreading codes for spreading said information signals and spread signals; and
transmission means for transmitting said synchronized signals to said transmission line together with said spread signals.

12. A wired spread spectrum communication method of transmitting information signals of a plurality of channels by code-division multiple connection through a transmission line, said wired spread spectrum communication method comprising the step of:
transmitting synchronized signals synchronized with any one of said information signals, spreading codes for spreading said information signals and spread signals to said transmission line together with said spread signals.
